# EUROPEAN PATENT APPLICATION

(11) **EP 4 645 766 A1**
(43) Date of publication of application: **05.11.2025**
(21) Application number: 25169716.5
(22) Date of filing: 10.04.2025
(51) Int. Cl.: H04L 12/413

(54) **WIRELESS INTERFACE FOR SINGLE PAIR ETHERNET NETWORK IN AN INDUSTRIAL AUTOMATION SYSTEM**

(30) Priority: 30.04.2024 US 202418650436
(71) Applicant: Rockwell Automation Technologies, Inc., Mayfield Heights, OH 44124 (US)
(72) Inventor: Leal Herrera, Victor, Mayfield Heights, OH, 44124 (US); Malkan, Chirag L., Mayfield Heights, OH, 44124 (US); Miller, Michael R., Mayfield Heights, OH, 44124 (US); Navarro, Rosanna M., Mayfield Heights, OH, 44124 (US)
(74) Representative: Grünecker Patent- und Rechtsanwälte PartG mbB

(57) **Abstract**

The present technology relates to single pair Ethernet (SPE) networks corresponding to industrial automation devices and wireless communication access to the SPE network by a remote device. A node having a single pair Ethernet communication module coupled to a wired single pair Ethernet network is configured to transmit communications to and receive communications from a first industrial automation device of one or more industrial automation devices coupled to the wired single pair Ethernet network. The node also comprises a wireless communication module configured to wirelessly communicate with an external application and comprises a communication bus coupled between the wireless communication module and the single pair Ethernet communication module and configured to transmit data between the wireless communication module and the single pair Ethernet communication module.

## Description

### TECHNICAL FIELD

Various embodiments of the present technology relate to industrial automation devices and particularly to a wireless interface for a single pair Ethernet system.

### BACKGROUND

Industrial automation environments, such as factories, mills, and the like, employ various devices like sensors and actuators (e.g., drives), machinery, and other components to perform industrial processes. Industrial automation components such as controllers, processors, and devices can automate various industrial systems and associated processes. For example, connected devices can perform functions in an integrated manner that, together, produces results.

Various methods exist for interconnecting the industrial automation components to allow them to communicate with one another. One method is a single pair Ethernet (SPE) network. Configuration of an SPE network and all the devices connected to it to perform the desired automation processes typically involves a controller or another specific device that connects to and goes through a central gateway. In some cases, it may be desirable to have only a few devices capable of controlling industrial applications in a small, simple automation process. In existing systems, the gateway and controller are needed to program and commission the industrial devices on the SPE network. However, controllers and gateways are expensive to purchase and maintain. Accordingly, improved systems are needed to program, commission, and otherwise communicate with industrial devices on an SPE network.

### SUMMARY

Systems, devices, and methods are provided herein for wirelessly communicating with one or more devices of a single pair Ethernet (SPE) network associated with industrial automation devices performing services on the SPE devices via a remote device coupled wirelessly to the SPE network. An industrial or commercial environment may include various industrial automation devices (e.g., such as variable-speed drives, motors, belts, and the like together with switches, contactors, and relays that control them) that perform industrial automation processes. More particularly, devices in the SPE network may be configured to be a parent or child device via its function in the industrial automation system. A switch, for example, may be a parent device for controlling the running mode of a motor set up to be its child device. An access node with wireless features coupled to the SPE network allows remote configuration, setup, and analysis of the SPE network by a remote device.

In an embodiment of the present technology, an apparatus for providing wireless communication access on a single pair Ethernet network comprises a node having a single pair Ethernet communication module coupled to a wired single pair Ethernet network and configured to transmit communications to and receive communications from a first industrial automation device of one or more industrial automation devices coupled to the wired single pair Ethernet network. The node also comprises a wireless communication module configured to wirelessly communicate with an external application and comprises a communication bus coupled between the wireless communication module and the single pair Ethernet communication module and configured to transmit data between the wireless communication module and the single pair Ethernet communication module.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

While multiple embodiments are disclosed, still other embodiments of the present technology will become apparent to those skilled in the art from the following detailed description, which shows and describes illustrative embodiments of the invention. As will be realized, the technology is capable of modifications in various aspects, all without departing from the scope of the present invention. Accordingly, the drawings and detailed description are to be regarded as illustrative in nature and not restrictive.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
**Figure 1** illustrates an example operating environment for industrial automation in accordance with some embodiments of the present technology.
**Figure 2** illustrates another example operating environment for industrial automation in accordance with some embodiments of the present technology.
**Figure 3** illustrates another example operating environment for industrial automation in accordance with some embodiments of the present technology.
**Figure 4** illustrates an example block diagram of a wireless access point in accordance with some embodiments of the present technology.
**Figure 5** illustrates an example block diagram of a wireless access point in accordance with additional embodiments of the present technology.
**Figure 6** illustrates an example block diagram of providing application services via the wireless access point in accordance with some embodiments of the present technology.
**Figure 7** illustrates a flowchart for a method of communicating with the wireless access point in accordance with some embodiments of the present technology.
**Figure 8** illustrates an example sequence diagram of commissioning an SPE node with an SPE wireless access point and a gateway in accordance with some embodiments of the present technology.
**Figure 9** illustrates an example sequence diagram of communications between an end user and a pair of SPE nodes with a gateway incorporating an SPE wireless access point in accordance with some embodiments of the present technology.
**Figure 10** illustrates an example computing system used in some embodiments of the present technology.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

Various embodiments of the present technology related to communicating with devices in an industrial automation environment, and more particularly, to a wireless interface for configuring, customizing, requesting, and viewing industrial automation devices on a Single Pair Ethernet (SPE) network. In industrial and commercial environments, various devices, such as drives, motors, relays, sensors, and the like along with the driven machinery, such as conveyors, pumps, fans, and more, which can be used to perform industrial, manufacturing, and commercial processes. Several processes involving such devices can be automated through the use of processors and controllers coupled to devices. These processors, controllers, devices, and other components coupled to the SPE may be known as nodes. The nodes are coupled together on the SPE to allow for communication therebetween and for communication with a network gateway also coupled to the SPE.

Setting up the nodes to operate according to a desired industrial automation system design may involve coupling a controller to the gateway via an Ethernet cable and configuring the devices through the gateway connected to the controller to operate according to predetermined operations. For example, one node may be a push button device, and another node may be a motor control device desired to be operated by the push button device. Setting up the push button device to control operation of the motor control device may be accomplished by the controller using commissioning instructions transmitted to the gateway that are designed to instruct the push button device to set up communication with the motor control device via the SPE to control a START and/or STOP operation of the motor control device in response to a user physically activating the push button device.

However, using a controller to communicate with the gateway for setting up nodes and otherwise providing instructions to the nodes may be eliminated using the techniques presented herein that allow for wireless communication with the gateway. In this manner, the gateway may receive information from wireless devices such as a mobile phone, tablet, notebook computer, or other mobile device having wireless communications. Further, elimination of the controller is possible due to the wireless communication because the wireless devices may provide commissioning instructions for commissioning or otherwise configuring the nodes. As such, the cost of having a controller for wired Ethernet connection with the gateway can be eliminated to save setup and/or maintenance costs of the SPE system. Though it is thus possible to wirelessly communicate with the gateway without a controller, it may still be desired to have a controller connected to the system to, for example, remain in control of the SPE devices, while the wireless interface provides read-access to the configuration as well as faults and alarms.

In an embodiment of the present technology, an apparatus for providing wireless communication access on a single pair Ethernet network comprises a node having a single pair Ethernet communication module coupled to a wired single pair Ethernet network and configured to transmit communications to and receive communications from a first industrial automation device of one or more industrial automation devices coupled to the wired single pair Ethernet network. The node also comprises a wireless communication module configured to wirelessly communicate with an external application and comprises a communication bus coupled between the wireless communication module and the single pair Ethernet communication module and configured to transmit data between the wireless communication module and the single pair Ethernet communication module.

In another embodiment, a method of communicating with a wired device on a single pair Ethernet network comprises receiving, via a wireless communication module of a node, a communication from a wireless device, wherein the communication comprises one or more instructions for the wired device coupled with the single pair Ethernet network. The method also comprises transmitting a request based on the one or more instructions from the wireless communication module of the node to a single pair Ethernet communication module of the node and communicating, via the single pair Ethernet communication module coupled with the single pair Ethernet network, with the wired device based on the request.

Advantageously, the disclosed system can provide on-site or remote access to the SPE network for commissioning, reconfiguring, data gathering, performing maintenance, and other services/tasks. The disclosed system also provides protocol translation/conversion between wireless protocols and SPE protocols for industrial automation.

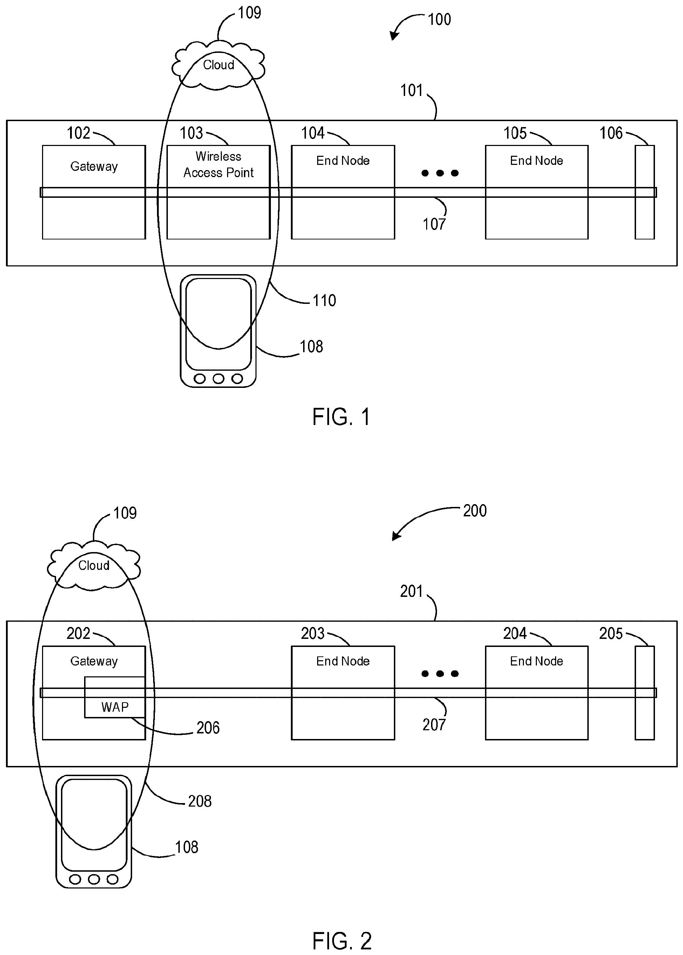

Turning now to the Figures, **Figure** 1 illustrates an example operating environment for industrial automation according to an implementation of the present technology. An industrial automation system 100 incorporating an SPE network 101 is shown. As is known, SPE includes the transmission of Ethernet via only a single pair of copper wires. SPE allows rapid deployment of devices within an industrial automation environment. Communication on the SPE may include protocols such as Ethernet/IP, Profinet, and EtherCAT. Additional benefits of an SPE network include lower costs for wiring, nodes, and power consumption.

The SPE network 101 illustrated in **Figure 1** includes a network gateway 102 and a wireless access point (WAP) 103 configured to allow direct wireless access to the SPE network 101. One or more end nodes 104, 105 are included as well as a media terminator 106. End nodes 104, 105 may include push button switches, sensors, toggle switches, rotary switches, contactors, power taps, actuators, field devices, and the like. The end nodes 104, 105 may include functional safety and non-safety industrial automation devices. The end nodes 104, 105 may be configured to control other end nodes or to respond to other end nodes connected to the SPE network 101. For example, a push button end node (e.g., end node 104) may be configured to communicate with an actuator end node (e.g., end node 105) to control the operating status of the actuator end node. A system of single pair Ethernet wires 107 is provided to couple the SPE network devices/nodes together. For example, the single pair Ethernet wires 107 couple the network gateway 102, WAP 103, end nodes 104, 105, and media terminator 106 together. Each of the devices coupled to the single pair Ethernet wires 107 may be referred to as a node. In one embodiment, a single ribbon cable may extend between the first and last nodes (e.g., the network gateway 102 and the media terminator 106 as illustrated in **Figure 1****)** together. In other embodiments, a plurality of wire segments couples the nodes 102-106 together via one or more connectors or field switches.

The SPE network 101 of **Figure 1** does not include a controller for communicating with the network gateway 102. Instead, the WAP 103, directly engaged with and coupled to the single pair Ethernet wires 107 communicates with the network gateway 102 for performing system services such as device commissioning, device reconfiguration, device maintenance, and other services/tasks. As described herein, the WAP 103 includes hardware and software capable of wirelessly connecting with a wireless device such as a mobile device 108 or a cloud server 109 for performing the system services. A wireless connection (represented by oval 110) allows local or remote connection with the WAP 103.

**Figure 2** illustrates another example operating environment for industrial automation according to an implementation of the present technology. An industrial automation system 200 includes an SPE network 201 having a network gateway 202, a plurality of end nodes 203, 204, and a media terminator 205. While the industrial automation system 100 of **Figure 1** includes the WAP 103 as a discrete node, the industrial automation system 200 of **Figure 2** illustrates that the network gateway 202 incorporates a wireless access point 206 inside it housing. As such, a separate, discrete WAP connected to the single pair Ethernet wires 207 can be eliminated. The WAP 206 within the network gateway 202 is directly coupled to the single pair Ethernet wires 207 and wirelessly couples to the mobile device 108 and the cloud server 109 via a wireless connection 208.

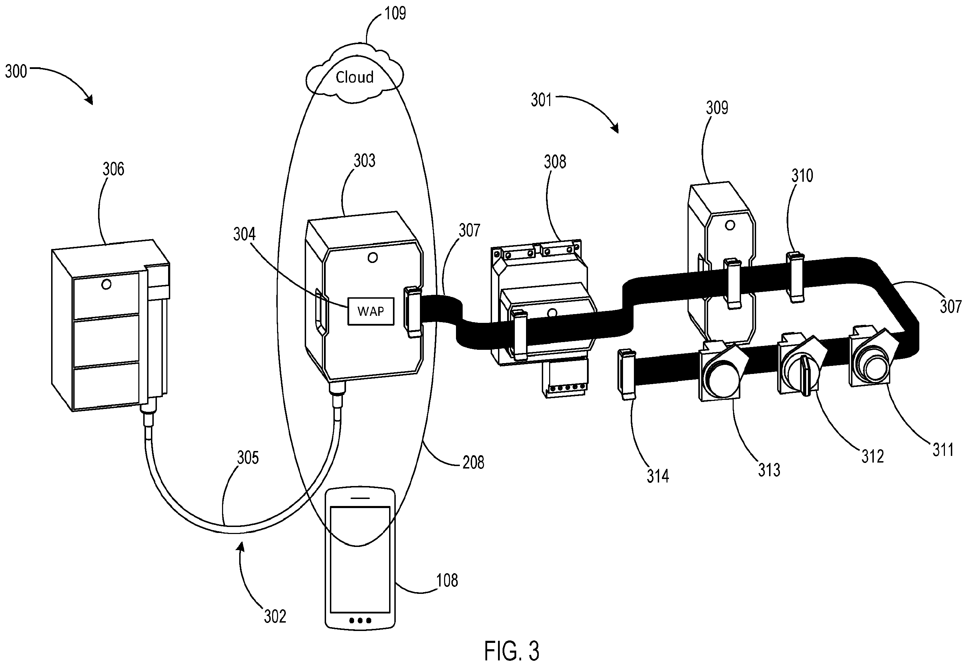

**Figure 3** illustrates another example operating environment for industrial automation according to an implementation of the present technology. **Figure 3** shows an industrial automation system 300 incorporating both an SPE network 301 and an Ethernet network 302 based on a different protocol such as TCP/IP. Similar to the industrial automation system 200 of **Figure 2****,** the SPE network 301 of **Figure 3** includes a combination network gateway/WAP device 303 includes an internal WAP 304 that provides wireless access by the mobile device 108 or cloud server 109 to the wired SPE network 301 while gateway 303 is also coupled to an Ethernet cable 305 for wired access to the Ethernet network 302 by a controller 306. As illustrated, a single pair ethernet wire 307 includes a ribbon cable having nodes 308, 309, 310, 311, 312, 313, 314 coupled thereto. Examples of the nodes 308-314 include push button switches, sensors, toggle switches, rotary switches, contactors, power taps, motor controllers, actuators, field devices, etc.

One advantage of an SPE network (e.g., SPE networks 101, 201, 301) includes the ability to quickly and easily expand or contract the number of nodes attached to the network. The node devices (e.g., nodes 308, 309, 311-313) may be identified by a network address assigned to each device. Communications between a source device and a target device includes information about the intended target's network address. For example, a contactor (e.g., the source device) may communicate command signals to a motor controller (e.g., the target device) by transmitting a communication packet, having command signals together with the network address of the controller, to the SPE network to enable the motor controller to receive and operate according to the command signals. The contactor queries the motor controller, which provides feedback data. The contactor can then make control-related decisions based on the response of the motor controller and other devices. Other devices connected to the SPE network will ignore the command signals since their network addresses were not included in the communication packet. The substitution of one target source on the SPE network for another (e.g., to replace a worn or malfunctioning device) involves providing the network address of the target device to the replacement device, setting the network address of the replacement device, and setting any other parameters desired for the replacement device such as specifying operational conditions and parameters of any notification indicators of the replacement device. Such replacement device installation may be accomplished via a commissioning process for the new/replacement device.

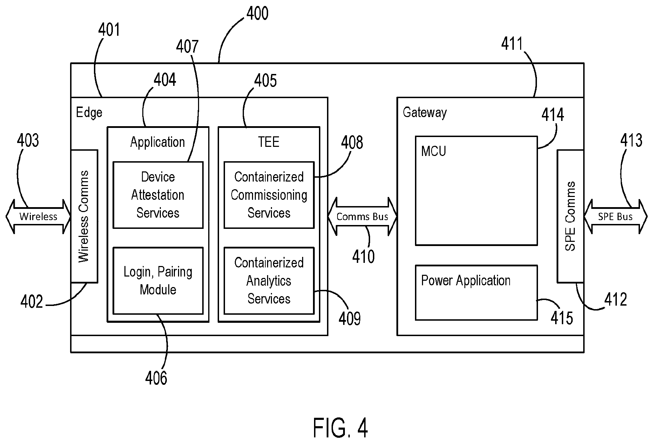

According to implementations of the present technology disclosed herein, commissioning and other processes can be accomplished via the mobile device 108 **(****Figures 1-****3)** or the cloud server 109 **(****Figures 1-3****)** being wirelessly connected to the WAPs 103, 206, 304 **(****Figures 1-3****).** A block diagram of an exemplary wireless access point (WAP) 400 is illustrated in **Figure 4** in accordance with some embodiments of the present technology. The WAP 400 may be implemented as any of the WAPs 103, 206, 304. A wireless communication module or edge board 401 includes a wireless communications circuit 402 capable of establishing a wireless connection 403 to and communicating with the mobile device 108 or the cloud server 109. The mobile device 108 may be any portable or mobile device capable of wireless communication via a wireless protocol such as Bluetooth, near field communication (NFC), Wi-Fi, and the like.

The edge board 401 also provides application services 404 and trusted execution environment (TEE) services 405. It is contemplated that the application services 404 and TEE services 405 may be implemented in hardware, in one or more processors, or in one or more software modules. For example, the application and TEE services 404, 405 may be implemented using any number of processors appropriate to the design. A login, paring module 406 implemented by the application services 404 facilitates and establishes pairing between an application running on the mobile device 108 or cloud server 109 and the WAP 400. A further device attestation services module 407 can be used to verify trustworthiness of the platform and software running on the edge board 401. Such attestation may be presented, for example, as a certificate to the remote device attesting to the origin and trustworthiness of the code on the WAP 400. If further combined with encryption, third party eavesdropping may be eliminated.

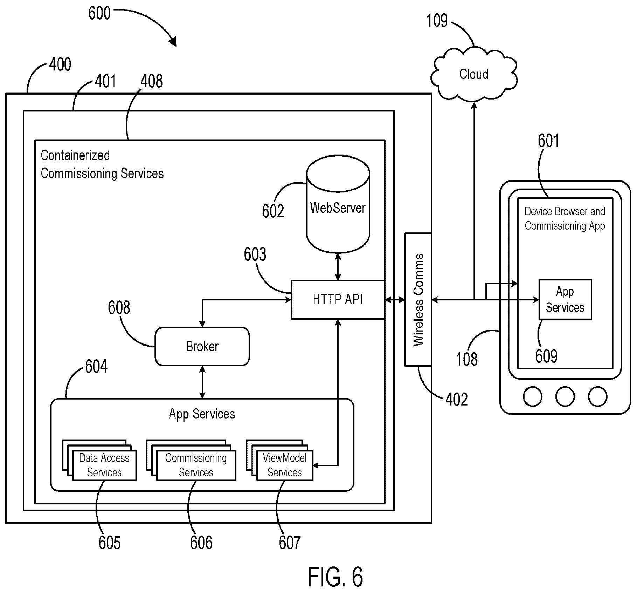

The TEE services 405 operates with high levels of protection and isolation from other areas of the processor environment, and applications and services running within the TEE provide a high level of trustworthiness. Code operating within the TEE services 405 is trusted to be authorized and installed as expected by the code designers. Outside of the TEE, the data running within the TEE cannot be read or tampered with. The TEE services 405 includes modules for executing containerized commissioning services 408 and containerized analytics services 409. Commissioning services assist in setting up new nodes connected to the SPE network 101, 201, 301 (Figures 1-3) as described above. The commissioning services are containerized by the containerized commissioning services 408 so that the application executing the commissioning services is isolated and efficient and includes libraries, configuration files, binaries, and frameworks necessary to the application in a single lightweight executable. An example illustrating node commissioning is shown and discussed in **Figure 6** hereinbelow.

Analytics services 409 performed by the TEE services 405 are also containerized. The analytics may include tasks such as data logging and recording related to any or all of the nodes coupled to the SPE networks 101, 201, 301 as well as logging and/or recording of the WAP 400 itself. A mapping of the SPE networks 101, 201, 301 regarding the devices/nodes coupled to the SPE networks 101, 201, 301 as well as their network addresses and other non-operation data may also be logged and/or recorded. Alternatively, the WAP 400 may store such mapping elsewhere in memory. When requested by an application from the mobile device 108 or cloud server 109, raw data collected by the TEE services 405 in the containerized analytics services 409 may be delivered to the application for analytics processing, or data analyzed by and stored by the TEE services 405 may be delivered. In this manner, it may be possible to store raw data in a simplified process or to perform data analytics in a more complex process for viewing/analysis via the application. Performing data analytics may include gathering operational data from one or more of the nodes and analyzing the data according to desired metrics. The analyzed metric data may be returned to the mobile device 108 or cloud server 109 in response to the analytics data request.

A communications bus 410 in the WAP 400 allows communication between the edge board 401 and an SPE or gateway board 411. The gateway board 411 includes an SPE communications circuit 412 directly coupleable to the single pair ethernet wires of an SPE network bus 413 (e.g., wires 107, 207, 307 of **Figures 1-3****)** for direct access to the nodes coupled thereto. The gateway board 411 may be configured to act as a communications translator between the protocol of the SPE networks 101, 201, 301 and the communications with the edge board 401 and mobile device 108 or cloud server 109. In addition, the gateway board 411 may include one or more processors configured to execute applications such as a microcontroller unit (MCU) 414 and a power application 415.

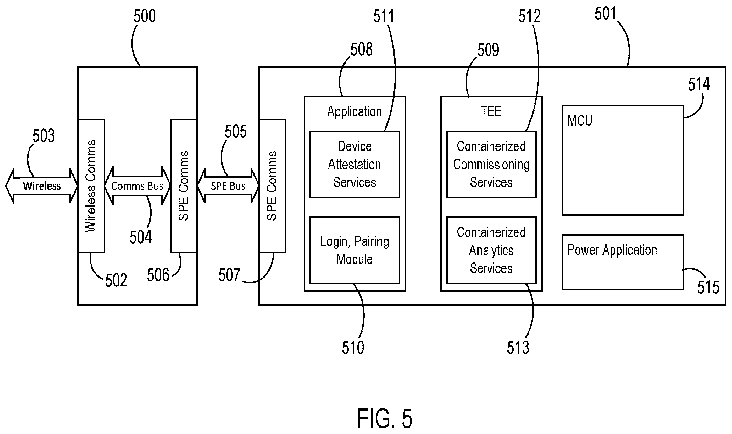

A block diagram of an exemplary wireless access point (WAP) 500 and gateway 501 is illustrated in **Figure 5** in accordance with alternate embodiments of the present technology. The WAP 500 and gateway 501 may be implemented as the WAP 103 and network gateway 102 of **Figure 1****,** for example. The WAP 500 includes a wireless communications circuit 502 capable of establishing a wireless connection 503 to and communicating with the mobile device 108 or the cloud server 109. A communications bus 504 is capable of converting or translating between communication protocols such as 5G/wi-fi communications from the wireless connection 503 and an SPE-based communication protocol for connection to a SPE network bus 505 (e.g., such as the SPE network 101 of **Figure 1****)** via a SPE communications circuit 506. In one embodiment, the SPE communication protocol operates via 10BASE-T1S Ethernet technology or via 10BASE-T1L Ethernet technology. In one example, a 10BASE-T1L physical layer (PHY) within the SPE communications circuit 506 operates using full-duplex communications over a single balanced pair of conductors of the SPE network bus 505 with an effective data rate of 10 Mbps simultaneously in each direction. The 10BASE-T1L protocol allows up to 10 Mbps data rate over a reach of 1,000 meter distances in building automation systems. The 10BASE-T1S protocol can allow a reach up to about 25 meters.

The gateway 501 communicates with the SPE network bus 505 via a SPE communications circuit 507 and includes an application processor 508 and a TEE processor 509 similar to the WAP 400 of **Figure 4****.** The login, paring module 510, device attestation services module 511, containerized commissioning services 512, and containerized analytics services 513 operate as described for the WAP 400 of **Figure 4****.** The gateway 501 may also include an MCU 514 and a power application module 515 similar to the WAP 400 of **Figure 4****.** The standalone WAP 500 illustrated in **Figure 5** allows a simple pass-through to the gateway 501 where the WAP 500 functions as a protocol translation device.

As referred to above, **Figure 6** illustrates an example block diagram 600 of providing containerized commissioning services in accordance with some embodiments of the present technology. As explained below, a browser and commissioning application 601 running on the mobile device 108 communicates with the WAP 400 or WAP 500 related to commissioning services. While shown and discussed as being executed on the mobile device 108, the commissioning application 601 may instead be run via the cloud server 109, and examples herein of communications with the mobile device 108 are understood to also apply to communications with the cloud server 109. Cloud server 109 is representative of a cloud-based environment in which the remote device processes explained herein may be performed. In various examples, cloud server 109 may include one or more servers, processors, databases, datacenters, and the like capable of executing the browser and commissioning app 601. Cloud server 109 may be accessed by mobile device 108 or by a computer system (not shown) connected to the cloud server 109 via the Internet, for example.

As stated above, the addition or replacement of a node device to the SPE networks 101, 201, 301 may include a commissioning of the new device to work with another connected device over the SPE network. Commissioning may include setting the network address of the new device and providing the network address of any device or devices with which the new device is to cooperate. In an example where the new device is a push button device, its commissioning may include providing its network address, the network address of a controller (e.g., such as a motor controller) whose operational state the push button device is responsible for controlling, and one or more parameters for visually indicating the status of the controller via a light embedded in the push button of the push button device. If required by the controller, the commissioning may also include providing the network address of the push button device to the controller so it knows which device is responsible for its operation.

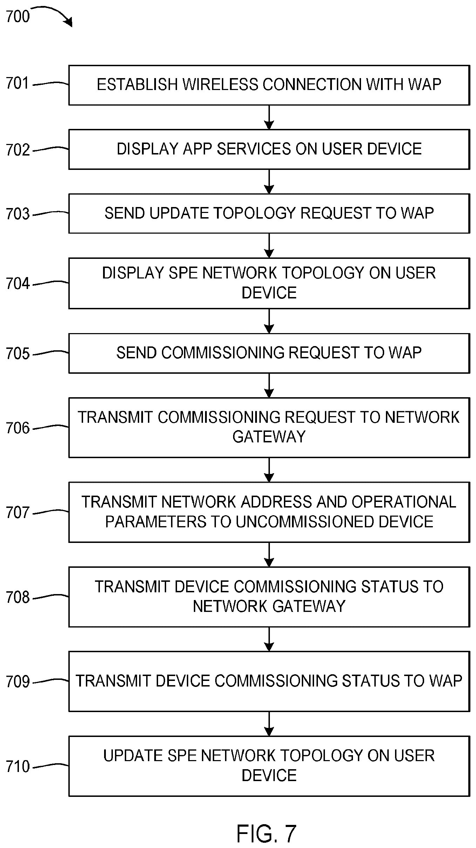

A method 700 of communicating with the WAP 400 to perform SPE-related services such as device commissioning is illustrated in **Figure 7** and will be discussed together with **Figure 6****.**

If a wireless connection with the mobile device 108 has not been previously established, a wireless connection (e.g., 403 of **Figure 4****)** can be established (step 701) via the application services 404 of the WAP 400 illustrated in **Figure 4****.** The browser and commissioning app 601 of the mobile device 108 may interface with a webserver application 602 on the WAP 400 via a hypertext transfer protocol application programming interface (HTTP API) communication protocol 603 of the containerized commissioning services 408. A plurality of app services 604 may be provided by the WAP 400 for interaction by the user of the mobile device 108. For example, the app services 604 may include data access services 605, commissioning services 606, and model viewing services 607. The webserver application 602 may deliver to the mobile device 108 a web-based application displayed by the browser and commissioning app 601 to the user. In this manner, the mobile device 108 does not need to execute a specific application specially made for communicating with the WAP 400 and the associated SPE network. Alternatively, an application running on the mobile device 108 may be made specifically for communicating with the WAP 400.

In response to establishing the wireless connection with the webserver application 602, the available app services 604 may be transmitted, via a broker 608, to the mobile device 108 for displaying (step 702) to the user the one or more app services 609 available for selection. In response to the webserver application 602 receiving a user selection request (step 703) of the service related to the model viewing services 607, the model viewing services 607 may be accessed to provide a topology of the SPE network for display (step 704) on the mobile device 108 that may show, in addition to other information, existing devices connected thereto and their respective commissioning status.

The displayed commissioning services 606 on the mobile device 108 may provide options to the user for new/replacement device commissioning within the SPE network topology. The user may select an uncommissioned device/end node for the commissioning service within the app services 609 and may input operational instructions related to its related device in the SPE network topology. For example, if the uncommissioned device is a parent device, the operational instructions may include information related to the child device to be controlled by the uncommissioned device. If the uncommissioned device is the child device, the operational instructions may include information related to the parent device intended to control and/or address the uncommissioned device. Selection by the user of a commissioning request based on the input information causes the browser and commissioning app 601 to send (step 705) a communication to the wireless communications circuit 402 via the wireless connection that includes a commissioning request corresponding to the selected uncommissioned device and its related input/operational data. In response to receiving the commissioning request, the webserver application 602 communicates with the commissioning services 606 to carry out the device commissioning.

The commissioning services 606 may be programmed or configured to communicate (step 706), via the communications bus 410 and the gateway board 411, with a network gateway (e.g., network gateways 102, 202, 303 of **Figures 1-3****)** over the SPE network cables to execute the device commissioning. For example, the network gateway, having a table of connected devices and their respective network addresses, may identify an unused network address and communicate (step 707) with the uncommissioned device over the SPE network cables to set its network address to the unused network address and to set any operational parameters based on the operation instructions transmitted to the webserver application 602 via the mobile device 108. The uncommissioned device, in response, may set its network address to the unused network address and set its operational parameters accordingly. In response, the uncommissioned device becomes commissioned and communicates (step 708) with the network gateway that its commissioning process is complete. The network gateway may then communicate (step 709) with the commissioning services 606 over the SPE network cables and via the communications bus 410 and the gateway board 411 that commissioning has been successful. The webserver application 602 may then update (step 710), via the wireless connection, the topology displayed on the browser and commissioning app 601 of the mobile device 108 to reflect the updated commissioning status of the selected device. Should any step of the commissioning process yield a failure, the webserver application 602 may instead indicate the error to the user via the browser and commissioning app 601.

While the method 700 illustrated and described in **Figure 7** relates to read/write communications for performing device commissioning, any read/write operation provided by the WAP 400 such as device reconfiguration, data access and gathering, maintenance, and other services/tasks are available and may be communicated between the WAP 400 and the mobile device 108 in a similar manner. For example, such read/write communications may be executed by the TEE services 405 and relate to gathering, clearing, or resetting services related to alarms and faults existing in any of the SPE nodes 308-314.

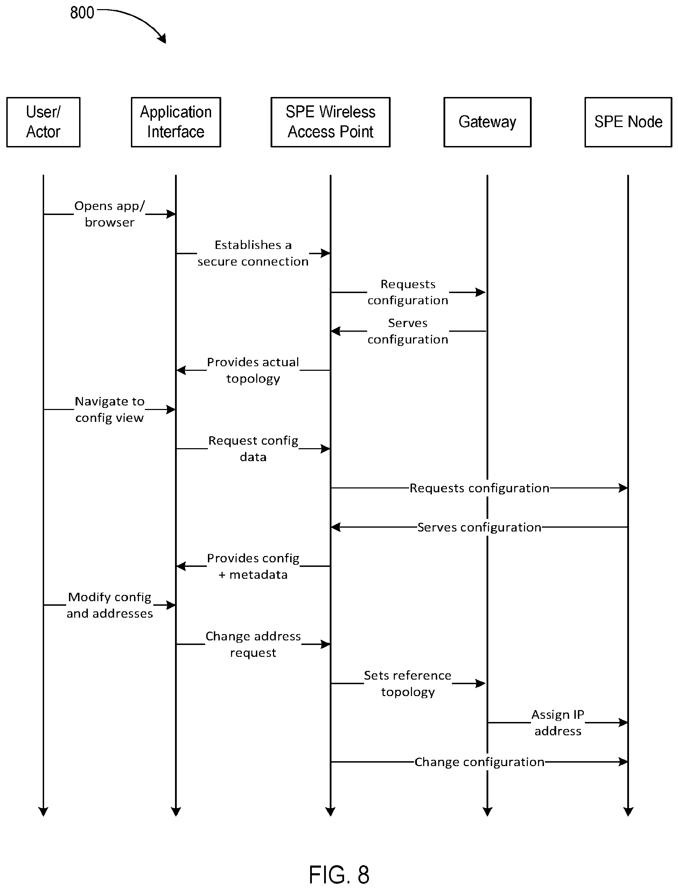

**Figure 8** shows an example sequence diagram 800 of a high-level commissioning sequence of an SPE node in accordance with some embodiments of the present technology. The sequence diagram 800 illustrates a number of sequence steps of a portion of the device commissioning described with respect to **Figures 6** **and** **7** above.

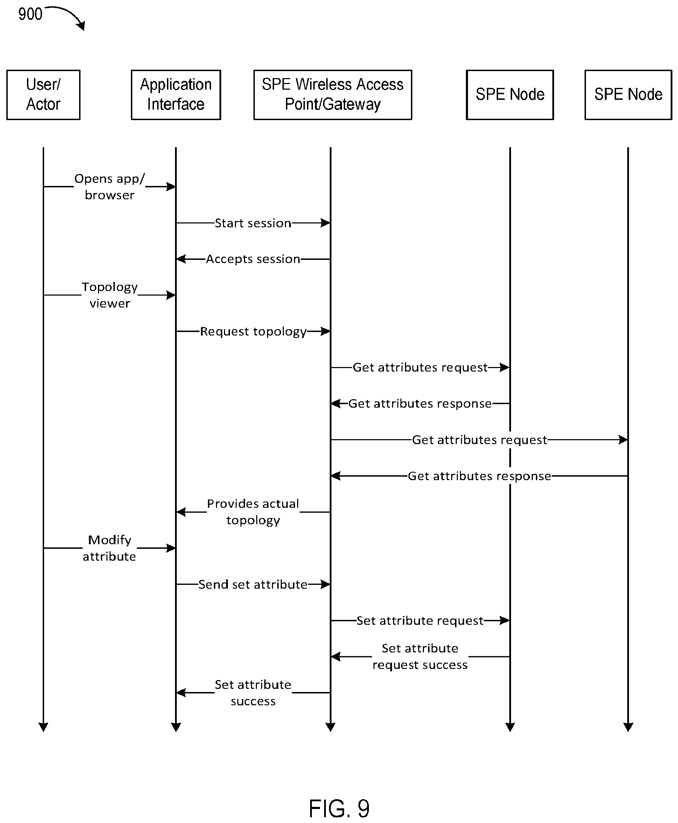

Referring again to **Figure 6****,** in one embodiment, the commissioning services module 606 further provides the mobile device 108 with services related to recommissioning or reconfiguring an SPE node. That is, a node previously commissioned with a network address and operational data related to a parent or target node may be reconfigured or updated via the commissioning services 606. The commissioned parameters of the node may be retrieved via the SPE network and transmitted to the mobile device 108 (or to the cloud server 109) for a current commissioning status of the node. The user may elect to modify the commissioning of the node in response to a change to the SPE network by transmitting reconfiguration instructions to the webserver application 602 for reconfiguring the node. An exemplary sequence diagram 900 illustrating a node reconfiguration based on the commissioning services 606 is illustrated in **Figure 9****.** The node reconfiguration may occur, for example, after device commissioning and be based on updated configuration settings for the target device.

In another embodiment, the webserver application 602 provides the data access services 605 by communicating with the containerized analytics services 409 to deliver and provide data access services to the mobile device 108. The data access services 605 allow the mobile device 108 transmit a gather request to the network gateway (e.g., 102, 202, 303 of **Figures 1-3****)** to gather network attributes of the devices in the SPE network via the SPE wires. The gathered attributes are transmitted to the mobile device 108 in response to the request. Optionally, the network gateway may log and store network attributes of the SPE nodes in a local memory and may use the data stored in the local memory for responding to the request. The network attributes may include, for example, a position of a switch, an illumination state of a visual indicator, a number of actuations of a movable component (e.g., a lifetime number of time a switch or button has been activated or pressed), a temperature of the device, and the like.

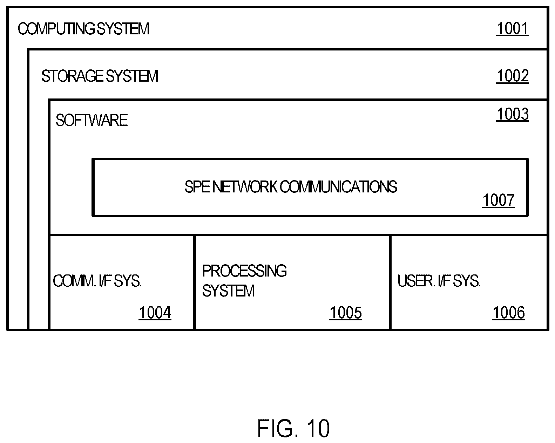

**Figure 10** illustrates computing system 1001 to perform SPE network processes based on instructions from a wireless remote device according to an implementation of the present technology. Computing system 1001 is representative of any system or collection of systems with which the various operational architectures, processes, scenarios, and sequences disclosed herein for performing SPE network processes may be employed. Computing system 1001 may be implemented as a single apparatus, system, or device or may be implemented in a distributed manner as multiple apparatuses, systems, or devices. Computing system 1001 includes, but is not limited to, storage system 1002, software 1003, communication interface system 1004, processing system 1005, and user interface system 1006 (optional). Processing system 1005 is operatively coupled with storage system 1002, communication interface system 1004, and user interface system 1006. Computing system 1001 may be representative of a cloud computing device, distributed computing device, or the like.

Processing system 1005 loads and executes software 1003 from storage system 1002. Software 1003 includes and implements SPE network communications 1007, which is representative of any of the services provided by the WAP 400 described herein. When executed by processing system 1005 to provide SPE network process performance functions, software 1003 directs processing system 1005 to operate as described herein for at least the various processes, operational scenarios, and sequences discussed in the foregoing implementations. Computing system 1001 may optionally include additional devices, features, or functionality not discussed for purposes of brevity.

Referring still to **Figure 10****,** processing system 1005 may comprise a microprocessor and other circuitry that retrieves and executes software 1003 from storage system 1002. Processing system 1005 may be implemented within a single processing device but may also be distributed across multiple processing devices or sub-systems that cooperate in executing program instructions. Examples of processing system 1005 include general purpose central processing units, graphical processing units, application specific processors, and logic devices, as well as any other type of processing device, combinations, or variations thereof.

Storage system 1002 may comprise any computer readable storage media readable by processing system 1005 and capable of storing software 1003. Storage system 1002 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 1002 may also include computer readable communication media over which at least some of software 1003 may be communicated internally or externally. Storage system 1002 may be implemented as a single storage device but may also be implemented across multiple storage devices or sub-systems co-located or distributed relative to each other. Storage system 1002 may comprise additional elements, such as a controller capable of communicating with processing system 1005 or possibly other systems.

Software 1003 (including SPE network communications 1007) may be implemented in program instructions and among other functions may, when executed by processing system 1005, direct processing system 1005 to operate as described with respect to the various operational scenarios, sequences, and processes illustrated herein. For example, software 1003 may include program instructions for implementing SPE network processes as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 1003 may include additional processes, programs, or components, such as operating system software, virtualization software, or other application software. Software 1003 may also comprise firmware or some other form of machine-readable processing instructions executable by processing system 1005.

In general, software 1003 may, when loaded into processing system 1005 and executed, transform a suitable apparatus, system, or device (of which computing system 1001 is representative) overall from a general-purpose computing system into a special-purpose computing system customized to provide SPE network process performance as described herein. Indeed, encoding software 1003 on storage system 1002 may transform the physical structure of storage system 1002. The specific transformation of the physical structure may depend on various factors in different implementations of this description. Examples of such factors may include, but are not limited to, the technology used to implement the storage media of storage system 1002 and whether the computer-storage media are characterized as primary or secondary storage, as well as other factors.

For example, if the computer readable storage media are implemented as semiconductor-based memory, software 1003 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 1004 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 1001 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The aforementioned communication networks and protocols are well known and need not be discussed at length here.

As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number, respectively. The word "or," in reference to a list of two or more items, covers all of the following interpretations of the word: any of the items in the list, all of the items in the list, and any combination of the items in the list.

While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. An apparatus for providing wireless communication access on a single pair Ethernet network comprising:
a node comprising:
a single pair Ethernet communication module coupled to a wired single pair Ethernet network and configured to transmit communications to and receive communications from a first industrial automation device of one or more industrial automation devices coupled to the wired single pair Ethernet network;
a wireless communication module configured to wirelessly communicate with an external application; and
a communication bus coupled between the wireless communication module and the single pair Ethernet communication module and configured to transmit data between the wireless communication module and the single pair Ethernet communication module.

2. An apparatus of claim 1, wherein the wireless communication module comprises a processor configured to execute attestation services to verify trustworthiness of software running on the node.

3. The apparatus of claim 1 or 2, wherein the wireless communication module is further configured to receive commissioning instructions from the external application related to the first industrial automation device; and
wherein the single pair Ethernet communication module is further configured to commission the first industrial automation device based on the commissioning instructions.

4. The apparatus of claim 3, wherein the node further comprises a processor having a trusted execution environment configured to execute containerized commissioning services in response to receiving the commissioning instructions.

5. The apparatus of claim 4, wherein the processor is further configured to:
gather data related to operation of the first industrial automation device; and
analyze the gathered data; and
provide the analyzed data to the external application via the wireless communication module.

6. The apparatus of claim 5, wherein gathered comprises one of alarm data and fault data.

7. The apparatus of one of claims 1 to 6, at least one of:
further comprising a gateway adapter coupled to the node via the wired Ethernet network; and
wherein the wireless communication module is further configured to receive reconfiguration instructions from the external application related to the first industrial automation device; and
wherein the single pair Ethernet communication module is further configured to reconfigure the first industrial automation device based on the reconfiguration instructions.

8. The apparatus of one of claims 1 to 7, further comprising a gateway adapter comprising the node and configured to:
gather network attributes of the one or more industrial automation devices via the single pair Ethernet communication module in response to a gather request from the external application; and
transmit the network attributes to the external application via the wireless communication module in response to gathering the network attributes.

9. The apparatus of one of claims 1 to 8, wherein the first industrial automation device comprises an end node comprising a communications interface coupled with the wired Ethernet network, wherein the communications interface is configured to communicate with the single pair Ethernet communication module.

10. The apparatus of claim 9, wherein the first industrial automation device further comprises one of a push button switch, a sensor, a toggle switch, a rotary switch, a contactor, a power tap, a motor controller, an actuator, a field device, and a visual status indicator.

11. The apparatus of claim 10, wherein the single pair Ethernet communication module is further configured to:
request, from the communications interface, a status parameter of the first industrial automation device; and
transmit the status parameter to the wireless communication module via the communication bus; and
wherein the wireless communication module is configured to wirelessly transmit the status parameter to the external application.

12. The apparatus of one of claims 9 to 11, wherein the first industrial automation device further comprises one of a functional safety industrial automation device and a functional non-safety industrial automation device.

13. The apparatus of one of claims 1 to 12, at least one of:
wherein the wireless communication module is configured to wirelessly communicate with the external application executed one of a mobile device and a cloud-based server; and
wherein the wired single pair Ethernet network comprises one of 10BASE-T1S Ethernet technology and 10BASE-T1L Ethernet technology.

14. A method of communicating with a wired device on a single pair Ethernet network, the method comprising:
receiving, via a wireless communication module of a node, a communication from a wireless device, wherein the communication comprises one or more instructions for the wired device coupled with the single pair Ethernet network;
transmitting a request based on the one or more instructions from the wireless communication module of the node to a single pair Ethernet communication module of the node; and
communicating, via the single pair Ethernet communication module coupled with the single pair Ethernet network, with the wired device based on the request.

15. The method of claim 14, at least one of:
wherein the communication comprises one or more instructions for commissioning the wired device;
further comprising transmitting a status communication to the wireless device, the status communication indicating a status of the wired device in response to communicating with the wired device based on the request;
wherein communicating with the wired device comprises setting or retrieving operating information of the wired device; and
wherein receiving the communication from a wireless device comprises receiving the communication from a mobile device and a cloud-based server.
